(19) Europäisches Patentamt
European Patent Office
Office européen des brevets

(11) **EP 3 323 165 B1**

(12) **EUROPEAN PATENT SPECIFICATION**

(45) Date of publication and mention of the grant of the patent:
**17.04.2019 Bulletin 2019/16**

(51) Int Cl.:
*H01M 4/86* (2006.01)　　*H01M 4/92* (2006.01)
*C25B 1/04* (2006.01)　　*H01M 4/88* (2006.01)
*H01M 8/1011* (2016.01)　*H01M 8/1018* (2016.01)
*C25B 11/03* (2006.01)　　*C25B 1/12* (2006.01)

(21) Application number: **16730408.8**

(22) Date of filing: **21.06.2016**

(86) International application number:
**PCT/EP2016/064251**

(87) International publication number:
**WO 2017/009007 (19.01.2017 Gazette 2017/03)**

(54) **ELECTROCATALYTICALLY ACTIVE NANOCOMPOSITE MATERIAL AND A PRODUCTION METHOD THEREFOR**

ELEKTROKATALYTISCH AKTIVES NANOKOMPOSITMATERIAL UND HERSTELLUNGSVERFAHREN DAFÜR

MATÉRIAU NANOCOMPOSITE À ACTIVITÉ ÉLECTROCATALYTIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2015 LU 92779**

(43) Date of publication of application:
**23.05.2018 Bulletin 2018/21**

(73) Proprietor: **Luxembourg Institute of Science and Technology (LIST)**
**4362 Esch-sur-Alzette (LU)**

(72) Inventors:
• **DEL FRARI, Doriane**
**4362 Esch sur Alzette (LU)**
• **IBN EL AHRACH, Hicham**
**4362 Esch sur Alzette (LU)**
• **LONG, Hongtao**
**4362 Esch sur Alzette (LU)**
• **MICHEL, Marc**
**4362 Esch sur Alzette (LU)**

(74) Representative: **Pronovem**
**Pronovem Luxembourg**
**12, avenue du Rock n' Roll**
**BP 327**
**4004 Esch sur Alzette (LU)**

(56) References cited:
**US-A1- 2015 255 802**

• **HAOLIANG HUANG ET AL: "Ultradispersed platinum nanoclusters on polydopamine-functionalized carbon nanotubes as an excellent catalyst for methanol oxidation reaction", APPLIED CATALYSIS A: GENERAL., vol. 490, 15 November 2014 (2014-11-15), pages 65-70, XP055255023, NL ISSN: 0926-860X, DOI: 10.1016/j.apcata.2014.11.014 cited in the application**
• **LIANGQIA GUO ET AL: "A mussel-inspired polydopamine coating as a versatile platform for the in situ synthesis of graphene-based nanocomposites", NANOSCALE, vol. 4, no. 19, 20 August 2012 (2012-08-20), page 5864, XP055255115, United Kingdom ISSN: 2040-3364, DOI: 10.1039/c2nr31547e**
• **REN FANGFANG ET AL: "Facile synthesis of PtAu nanoparticles supported on polydopamine reduced and modified graphene oxide as a highly active catalyst for methanol oxidation", ELECTROCHIMICA ACTA, vol. 153, 2 December 2014 (2014-12-02), pages 175-183, XP029165308, ISSN: 0013-4686, DOI: 10.1016/J.ELECTACTA.2014.11.184**

## Description

## Field of the Invention

The invention generally relates to electrocatalytically active nanocomposite material, e.g. for use in fuel cells and/or electrolysers. Other aspects of the invention relate to the production of the nanocomposite material and electrocatalysts.

## Background of the Invention

Polymer electrolyte membrane fuel cells (PEMFCs) are considered as promising clean energy converters for future applications such as stationary, portable, and automotive applications.[1-2] However, for the technology to become ready for mass markets, the currently relatively high costs of the polymer electrolyte (or proton exchange) membrane (PEM) and the catalyst need be reduced. As regards the catalyst, its price is directly connected to the amount of noble metal, which is mostly platinum (Pt). In order to be able to reduce to the amount of Pt without sacrificing performance, so-called Pt utilization (indicated in units of power produced per unit of mass of Pt) has to be increased. It has already been shown that by using carbon decorated with Pt nanoparticles along with Nafion™ (trademark of DuPont for a sulfonated tetrafluoroethylene-based fluoropolymer-copolymer) as the proton conductive media it is possible to reduce the loading of Pt (from 4 $mg.cm^{-2}$ to 0.5 $mg.cm^{-2}$) in the electrode layer) [3]. It is worthwhile noting that in conventional membrane electrode assemblies (MEAs) approximately only 10% of the available Pt is catalytically active. [4]

Pt utilization is linked to the configuration of the triple-phase boundary (TPB), which is the region of contact of the reactant, the electrolyte and the catalyst and is responsible for the performance in term of power densities, e.g. of a PEMFC. [4] Hence, an optimization of these interfaces can be obtained by fine tuning the electrode structure at the nanoscale level. Up to now, plethora of methods were developed such as ink-jet printing, [6-7] sputtering, [8] and others [9] allowing to optimize the electrode assembly for low platinum density.

For example, Taylor et al. [6] applied an inkjet-based printing technique able to design PEMFC electrodes layers directly deposited onto a Nafion™ membrane. In this work, the anode made of commercial 20% Pt/C catalysts with a loading of 0.021 $mg_{Pt}$ $cm^{-2}$ yielded a Pt utilization of about 17600 mW $mg^{-1}$ in a $H_2/O_2$ fuel cell. For comparison, O'Hayre et al. [10] designed MEAs consisting of sputtered Pt films on both sides of a Nafion™ membrane whose thicknesses were around 5 nm and yielding 60% of the power output of a commercial MEA. Nevertheless, those methods have to be carried out under ultrahigh vacuum conditions, requiring costly and appropriate equipment. Moreover, the limited Pt deposition only into two dimensions and the lack of uniformity of sputter coating over a large surface constitute the main drawback of such a deposition method.

Recently, a versatile technique was applied for the development of fuel cell electrodes: the so called "layer-by-layer" (LBL) assembly [11-13] developed by Gero Decher. [14] This technique consists in alternately adsorbing oppositely charged polyelectrolytes on substrates by dipping or spraying. [15] Very high Pt utilization was obtained with the dipping technique. Pt utilization as high as 3400 $mW/mg_{Pt}$ was demonstrated. Nevertheless, dipping LBL technique still remains time consuming and not suitable for in-line processing. [16] Izquierdo et al. demonstrated that the spraying method can replace the dipping method allowing to speed up the LBL assembly by a factor of about 100. [17] It was observed that spraying can be advantageous for producing homogeneous films exhibiting reduced roughness. Moreover, Izquierdo et al. suggested that the rinsing step could be skipped between each spraying deposition thanks to the drainage occurring during spraying. It was shown that sprayed LBL technique is suitable for the fabrication of hydrogen fuel cell MEAs containing different catalysts. For example, with a sprayed LBL anode of Pt/PANI (Pt-decorated polyaniline), a Nafion™ membrane and sprayed Pt/C layer cathode, power density of 63 mW $cm^{-2}$ and Pt utilization of 437.5 mW $mg^{-1}$ were reached. [18] Here, the amount of Pt used was almost two times lower than for standard carbon-supported Pt catalyst MEAs. More recently, Wang et al. [19] manufactured "fast prepared" electrodes based on the sprayed LBL assembly of oxide particles under heat treatment. Such a process can accelerate the manufacturing thanks to the drying step when one layer is sprayed onto the membrane. In this case, any excess solvent is not drained away in liquid form, which reduces the risk of flushing away the precious catalyst. Pt utilization as high as 1468 $W/g^{-1}$ was obtained for the multilayer MEA.

Another factor affecting PEMFC performance is the catalyst support. It has been shown that the use of polydopamine (PDA) presents several advantages to stabilize platinum nanoclusters:

i) the strong binding between PDA and Pt precursor thanks to the presence of catechol and amino groups, [21]
ii) the $\pi$-$\pi$ interaction between PDA precursors (in particular dopamine) and graphitized carbon structures such as, e.g. carbon nanotubes, [22]
iii) the hydrophilicity of PDA and its controllable thickness on carbon substrate. [23]

Carbon nanotubes are well known for their excellent electric conductivity and high surface area which are advantageous for the electrocatalytic activity of Pt. Carbon nanotubes have been reported to form interconnected conducting networks. [24] This feature is beneficial for establishing good contact between loaded Pt catalyst and the electrolyte.

The article "Ultradispersed platinum nanoclusters on polydopamine-functionalized carbon nanotubes as an excellent catalyst for methanol oxidation reaction" by H. Huang et al., Applied Catalysis A: General 490 (2015) 65-70 discloses that prior PDA functionalization of carbon nanotubes (CNT) reduces the tendency of Pt to agglomerate into larger particles on the CNT surface. A more even distribution of the Pt particles was thereby reached.
The article "A mussel-inspired polydopamine coating as a versatile platform for the in situ synthesis of graphene-based nanocomposites" by L. Guo et al., Nanoscale 4 (2012) p. 5864-67 discloses an approach for in situ nucleation and growth of diverse noble metals, metal oxides and semiconducting nanoparticles on the of RGO.
The article "Facile synthesis of PtAu nanoparticles supported on polydopamine reduced and modified graphene oxide as a highly active catalyst for methanol oxidation" by R. Fangfang et al., Electrochimica acta 153, p. 175 discloses a strategy for the synthesis of PtAu nanoparticles with different Pt/au ratios supported on polydopamine reduced and modified graphene oxide (PtAu/PDA-RGO).

Document US 2015/255802 discloses a method for preparing an alloy catalyst for fuel cells. More particularly, a method is disclosed for preparing an alloy catalyst for fuel cells having excellent catalytic activity and high durability through the inhibition of particle size growth and a high alloying degree by coating a platinum or platinum-transition metal catalyst supported on carbon with polydopamine as a capping agent, followed by heat treatment.

**General Description**

A first aspect of the invention relates to an electrocatalytically active nanocomposite material, comprising electrically conductive carbon material (such as e.g. carbon black, single- or multi-walled CNTs, graphite particles, graphene particles) decorated with platinum nanoparticles or nanoclusters anchored thereon. The decorated electrically conductive carbon material (i.e. the carbon material with its attached Pt particles) is (completely or partially) overcoated with catecholamine-based polymer.

It should be noted that the term "decorated", as used herein, is not intended to imply any notion of embellishment. "Pt-decorated" means, in this context, "bearing individual Pt nanoclusters and/or Pt nanoparticles".

As used herein, the term "nanocluster" designates particles with a diameter or greatest extension of 2 nm. The term "nanoparticle" designates nanoparticles with a diameter or greatest extension from 2 nm to 50 nm. It is worthwhile noting that in the present context of Pt nanoparticles or nanoclusters, the preferred range for the average diameter (or greatest extension) thereof is from 0.5 nm to 20 nm, more preferably from 1 nm to 10 nm.

Surprisingly, it was found that the catecholamine-based polymer not only provides increased resistance to corrosion to the electrically conductive carbon material but also significantly improves Pt utilization. This result was obtained by comparing LBL spray-deposited naked and overcoated Pt-decorated electrically conductive carbon materials.

The electrically conductive carbon material preferably comprises graphitized carbon material, which is term used herein for commonly designating carbon molecules with vast delocalized orbitals extending over essentially the entire molecule. Graphitized carbon material covers, in particular, carbon nanotubes, graphene, and graphite flakes.

Catecholamine-based polymer is used for overcoating. The catecholamine-based polymer is preferably selected from the group comprising (or consisting of): polydopamine and eumelanin, copolymers thereof and polymer blends thereof. According to a preferred embodiment of the invention, the electrically conductive carbon material and the platinum nanoparticles or nanoclusters anchored thereon are overcoated with polydopamine.

It seems that the simultaneous presence of hydrophilic catechol and amine groups increases proton conductivity. Accordingly, carbon material (in particular CNTs) decorated with Pt nanoparticles or nanoclusters and wrapped with PDA or another catecholamine-based polymer are interesting structures enhancing both electric and proton conductivities while protecting the carbon material against oxidation. These materials are thus believed to be particularly suited for use in the aggressive environment inside a PEMFC, characterized by high water content, acidic pH, elevated temperatures (50-90°C), high potential (0.6-1.2 V), high oxygen content, and the presence of platinum also accelerating carbon corrosion. [25] When the carbon support material is degraded by corrosion, the performance of the cell strongly decreases, eventually leading to a total collapse of the electrode structure. This problem is thus considerably alleviated thanks to the present invention.

The electrically conductive carbon material may comprise a catecholamine surface functionalization, on which the Pt nanoparticles or nanoclusters are anchored. That surface functionalization would be applied prior to the Pt particles, thereby leading to formation of smaller Pt particles more evenly distributed over the carbon material.

The electrocatalytically active nanocomposite material according to the first aspect of the invention may be provided in any form. According to a preferred embodiment of the invention, the electrocatalytically active nanocomposite material forms a porous three-dimensional network, e.g. on a substrate such as a proton exchange membrane or a gas diffusion layer. Alternatively, the electrocatalytically active nanocomposite material could be provided in the form of a suspension, preferably a colloidal suspension. That suspension could then be used to deposit an electrocatalyst in the above-mentioned form of a porous 3D network, preferably by layer-by-layer (LBL) spraying.

A second aspect of the invention relates to an electrocatalyst, comprising the electrocatalytically active nanocomposite material. A third aspect of the invention relates to a fuel cell, e.g. a direct methanol fuel cell or a polymer electrolyte membrane fuel cell, comprising such an electrocatalyst. A fourth aspect of the invention relates to an electrolyser comprising such an electrocatalyst.

Another aspect of the invention relates to a method for producing electrocatalytically active nanocomposite material. The method comprises:

○ depositing Pt nanoparticles or nanoclusters on electrically conductive carbon material (for instance graphitized carbon material, such as e.g. carbon nanotubes, graphene, or graphite particles, in particular, flakes) using a suspension of the electrically conductive carbon material in a solution of chloroplatinic acid so as to form platinum-decorated carbon material; and

○ overcoating the platinum-decorated carbon material with catecholamine-based polymer.

Preferably, the Pt-decorated carbon material is overcoated with polydopamine using a dispersion of the platinum-decorated carbon material in a dopamine salt (e.g. dopamine hydrochloride) solution.

The electrically conductive carbon material may be naked or provided with a catecholamine surface functionalization before deposition of the platinum nanoparticles or nanoclusters.

Last but not least, an aspect of the invention relates to a method for producing an electrocatalyst. The method comprises forming a liquid dispersion of the electrocatalytically active nanocomposite material as described before and depositing the electrocatalytically active nanocomposite from the dispersion on a substrate so as to create a porous 3D network of the electrocatalytically active nanocomposite material. Preferably, the substrate comprises a polymer electrolyte membrane and/or a gas diffusion layer, e.g. configured for use in a fuel cell and/or an electrolyser. Deposition of the electrocatalytically active nanocomposite from the dispersion may be done in any suitable way, e.g. by LBL dipping. Preferably, however, the deposition is done using the LBL spraying technique. The advantages of this technique are that one is able to both increase the porosity of the deposited material in the multilayer structure and to limit any material loss (the liquid phase of the suspension may be evaporated rather than drained away). LBL spraying is a comparatively fast technique, which makes it suitable for in-line fabrication, e.g. of MEAs.

**Brief Description of the Drawings**

The accompanying drawings illustrate several aspects of the present invention and, together with the detailed description, serve to explain the principles thereof. In the drawings:

Fig. 1: is a schematic illustration of a Pt-decorated CNT overcoated with catecholamine-based polymer;

Fig. 2: is a schematic illustration of a Pt-decorated graphene particle overcoated with catecholamine-based polymer;

Fig. 3: is a schematic illustration of a Pt-decorated carbon black particle overcoated with catecholamine-based polymer;

Fig. 4: is a schematic exploded view of a multi-layered electrode assembly comprising an electrocatalyst according to a preferred aspect of the invention

Fig. 5: shows a transmission electron microscopy (TEM) of Pt-decorated multiwalled carbon nanotubes (MWNT/Pt) on the left and the corresponding Pt particle size distribution histogram on the right;

Fig. 6: shows a TEM of PDA-coated Pt-decorated multiwalled carbon nanotubes (PDA-MWNT/Pt) on the left and the corresponding Pt particle size distribution histogram on the right;

Fig. 7: shows the XPS spectrum of the MWNT/Pt of Fig. 5;

Fig. 8: shows the XPS spectrum of the PDA-MWNT/Pt of Fig. 6;

Fig. 9: is a cyclic voltammogram of the MWNT/Pt of Fig. 5 recorded in 0.5 M $H_2SO_4$ at 25°C and a sweep rate of 50 mV/s;

Fig. 10: is a cyclic voltammogram of the PDA-MWNT/Pt of Fig. 6 recorded in 0.5 M $H_2SO_4$ at 25°C and a sweep rate of 50 mV/s;

Fig. 11: shows the normalized peak current plots for the MWNT/Pt of Fig. 5 and the PDA-MWNT/Pt of Fig. 6;

Fig. 12: shows the polarization curves for an electrocatalyst obtained by LBL spray deposition of PDC-coated Pt-decorated MWNTs ([PDA-MWNT/Pt]$_{50}$) and an electrocatalyst obtained by LBL spray deposition of Pt-decorated MWNTs ([MWNT/Pt]$_{50}$);

Fig. 13: shows the power density curves of [PDA-MWNT/Pt]$_{50}$ and [MWNT/Pt]$_{50}$;

Fig. 14: is a scanning electron microscopy (SEM) cross-section of [MWNT/Pt]$_{50}$ on a substrate (PEM);

Fig. 15: is a SEM cross-section of [PDA-MWNT/Pt]$_{50}$ on a substrate (PEM);

Fig. 16: is a cyclic voltammogram corresponding to the electrooxidation of LBL-spray deposited PDA-coated CNTs not bearing Pt nanoparticles ([PDA-MWNT]$_{50}$) recorded in an Ar-saturated 0.5 M H$_2$SO$_4$ solution at 25°C and a sweep rate of 50 mV/s;

Fig. 17: is a cyclic voltammogram corresponding to the electrooxidation of LBL-spray deposited CNTs not bearing Pt nanoparticles ([MWNT]$_{50}$) recorded in an Ar-saturated 0.5 M H$_2$SO$_4$ solution at 25°C and a sweep rate of 50 mV/s;

Fig. 18: is a comparison of the normalized coulomb charge plots for [MWNT]$_{50}$ and [PDA-MWNT]$_{50}$.

## Detailed Description of Preferred Embodiments

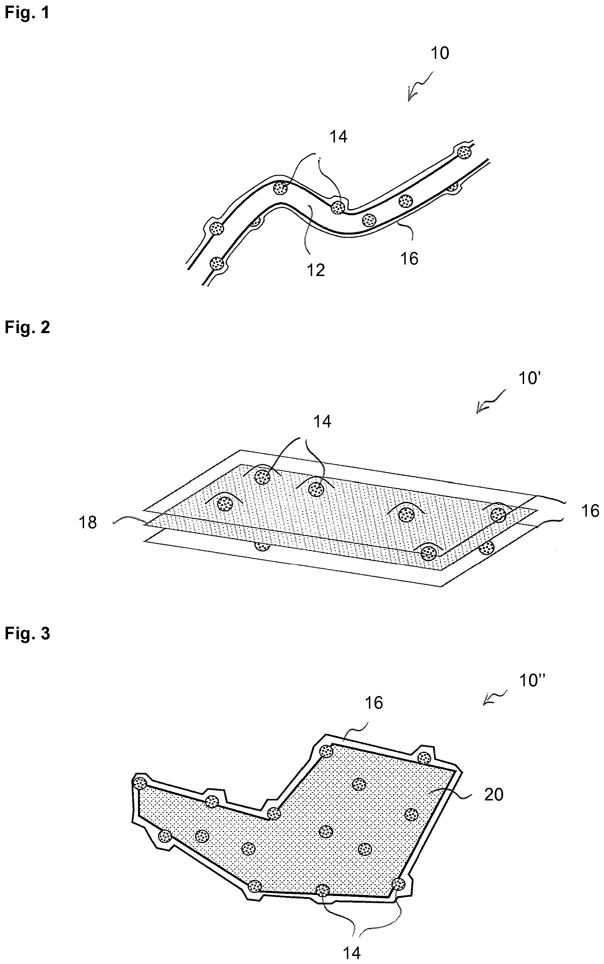

Figs. 1 to 3 schematically show different examples of electrocatalytically active nanocomposite material 10, 10', 10" according to preferred embodiments of the invention.

Fig. 1 illustrates a CNT 12 decorated with Pt nanoparticles 14 anchored thereon. The decorated CNT is sheathed with a coating 16 of catecholamine-based polymer.

Fig. 2 illustrates a graphene particle 18 decorated with Pt nanoparticles 14 anchored thereon. The decorated graphene is overcoated with catecholamine-based polymer 16.

Fig. 3 illustrates carbon black 20 decorated with Pt nanoparticles 14 anchored thereon. The decorated carbon black is overcoated with catecholamine-based polymer 16.

Two different catalyst supports were prepared:

i) multiwalled carbon nanotubes (MWNTs) decorated with Pt nanoparticles (abbreviated MWNT/Pt; as a comparative example); and

ii) MWNTs decorated with Pt nanoparticles and overcoated with PDA (abbreviated PDA-MWNT/Pt; as an example according to a preferred embodiment of the invention).

For the obtainment of the MWNT/Pt and the PDA-MWNT/Pt, MWNTs were first oxidized, creating nucleation sites for Pt nanoparticles formation during the reduction of H$_2$PtCl$_4$. For each example preparation, 100 mg multi-walled carbon nanotubes (MWNT) in 20 ml ethylene glycol (EG) were stirred under sonication for 10 min. 100 mg of chloroplatinic acid hexahydrate (H$_2$PtCl$_6$.6H$_2$O) in 30 ml EG were added to the suspension under agitation, and then the solution was heated to 140°C for 1.5 h under reflux. The solution was cooled down to room temperature and kept under agitation for 24 h. MWNT/Pt was collected by filtration and washed with deionized water.

The so-obtained MWNT/Pt exhibited a fairly uniform distribution of Pt nanoparticles over the entire length of the MWNTs, as can be seen in the transmission electron microscopy (TEM) investigations (Fig. 1). The Pt particles ranged in size from 7.25 to 8.2 nm.

The polydopamine-modified MWNT/Pt were prepared in the following way. 100 mg of the MWNT/Pt were dispersed in 200 ml of deionized water (10 mM Tris-HCl (pH 8.5)) containing 30 mM of cupric sulphate and 0.1 mg/ml of dopamine hydrochloride, before being stirred for 24 h at room temperature. The obtained PDA-MWNT/Pt were rinsed with deionized water.

One difficulty in the modification of MWNT/Pt by PDA is precipitation, which may introduce impurities to the MWNT/Pt. Such impurities can affect the structure of the PEMFCs as well as their performances. As it has been shown that the amount of precipitates depends on the dopamine concentration, [23] the latter was chosen equal to 0.1 mg/mL. Fig. 2 shows a TEM of the PDA-MWNT/Pt obtained this way.

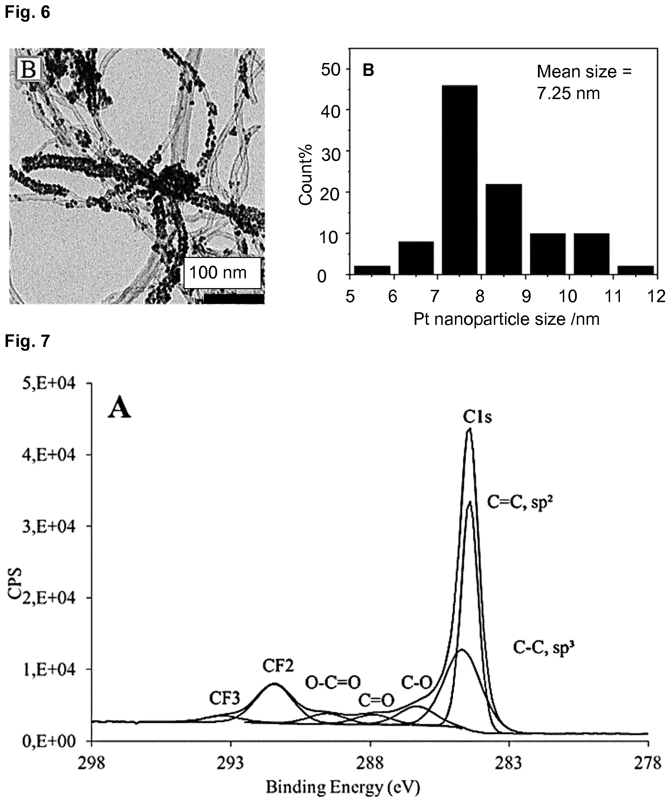

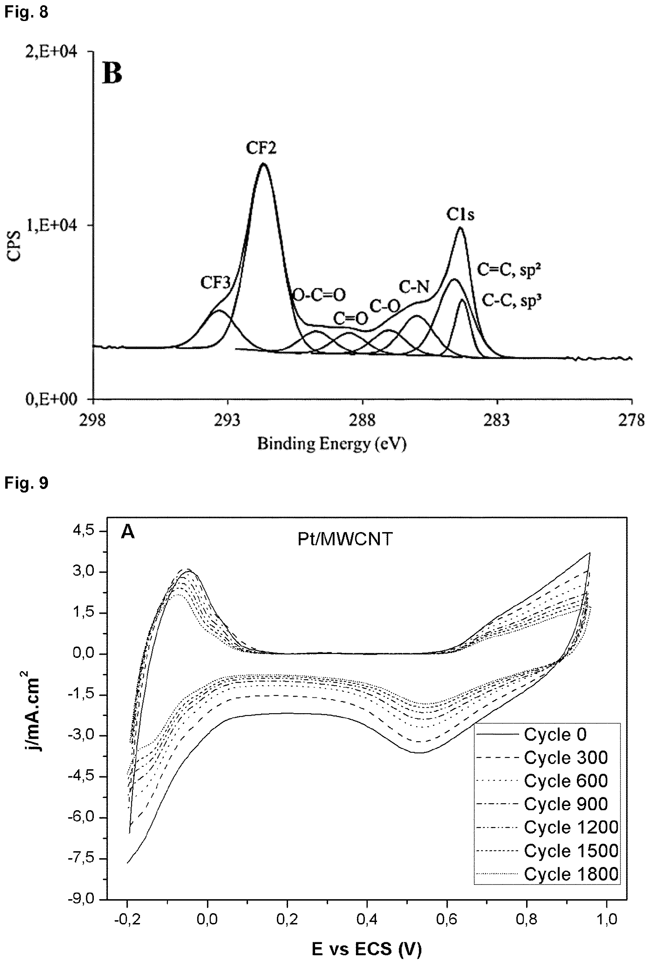

Figs. 7 and 8 show the XPS survey spectra of MWNT/Pt and PDA-MWNT/Pt respectively. Apart from the similar C, O of MWNT/Pt, additional N moieties are found in the spectrum of PDA-MWNT/Pt. These are due to the nitrogen-containing functional groups of polydopamine.

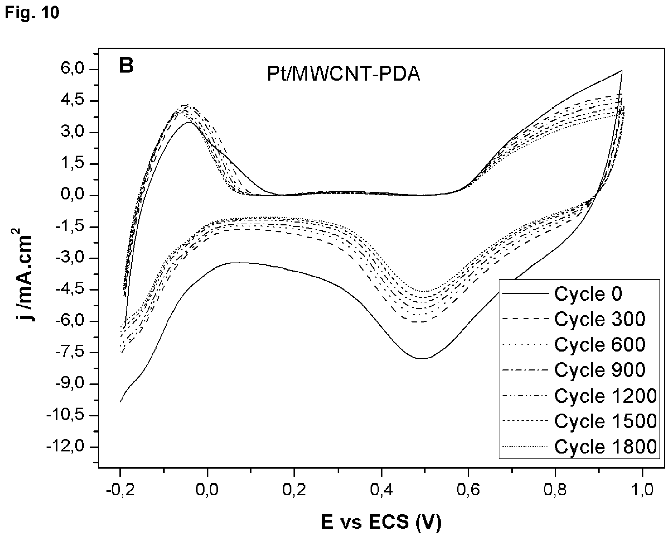

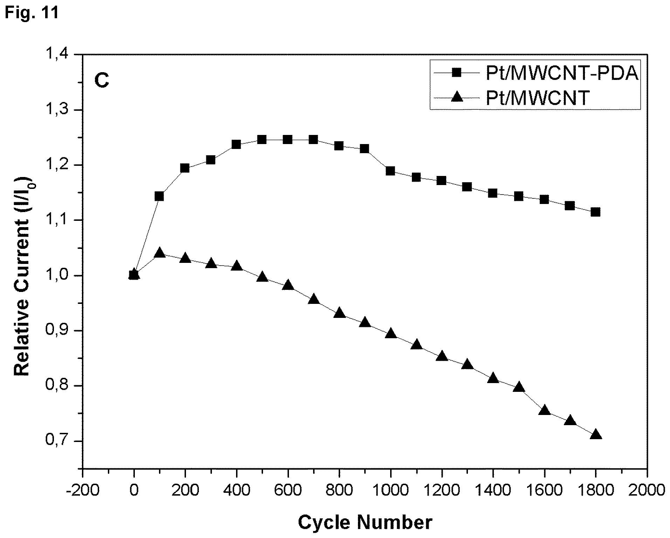

To investigate the electrochemical performance of PDA-MWNT/Pt and MWNT/Pt, characterizations were performed by cyclic voltammetry (CV). First, the prepared PDA-MWNT/Pt and MWNT/Pt catalysts were respectively mixed with 1 %-wt of Nafion™ ionomer which plays the role of dispersing agent. The CVs were cycled between -0.2 and 1 V vs. SCE (saturated calomel electrode) reference electrode. For each measurement, 1.2 mg of PDA-MWNT/Pt and MWNT/Pt, respectively, were deposited on a 1 cm diameter glassy carbon electrode to perform a CV measurement. The corresponding cyclic voltammograms can be seen in Figs. 9 and 10. The corresponding normalized peak current plots are shown in Fig. 11. The PDA-MWNT/Pt and MWNT/Pt catalysts showed similar increase in the hydrogen adsorption/desorption (H$_{ads/des}$) and oxygen adsorption/desorption (O$_{ad/des}$). This proves that the coverage of the MWNT/Pt system with PDA does not affect the catalytic reactions. Moreover, these results are also due to high electron and proton conductivities of the porous structure (nanotube network) allowing the reactants to reach the catalyst. The voltammograms can be compared by the calculation of the electrochemical active surface area (ECSA) of Pt of each catalyst. The double-layer capacitance is subtracted from the H$_{ads}$ peaks and the resulting area under the peaks is integrated. The average peak area corresponds to the total charge consumed by the Pt surface. The *ECSA* (in m$^2$g$^{-1}$) is then obtained by:

$$ECSA = H_{ads}/(210\mu C.cm^{-2}.Pt_{loading}),$$

where $H_{ads}$ stands for hydrogen adsorption in $\mu C.cm^{-2}$, Pt loading is the electrode Pt loading in $g.m^{-2}$ and the standard charge of 210 $\mu C$ correlates with the coverage of one $cm^2$ surface area of three basal Pt planes.

For the performed CV experiments, the *ECSA* of PDA-MWNT/Pt and MWNT/Pt was found to be 18.81 $m^2g^{-1}$ and 11.68 $m^2g^{-1}$, respectively. The Pt loadings of PDA-MWNT/Pt and MWNT/Pt were measured with thermogravimetric analysis (TGA; Netzsch STA 409) under $N_2$ from ambient temperature to 120 °C at a rate of 10 °C/min; the temperature was then kept constant at 120 °C for 30 min in order to remove all solvent. When that was done, the composite was heated to 1000 °C with a heating rate of 10 °C/min.

The numerical results show that overcoating of the MWNT/Pt catalyst with PDA improves the *ECSA* value. This result seems to be due to the presence of PDA which enhances the proton conductivity, the hydrophilic property of the MWNT/Pt as well as the catalytic reaction. This last feature can be observed on Fig. 11 showing the relative currents versus the cycle number.

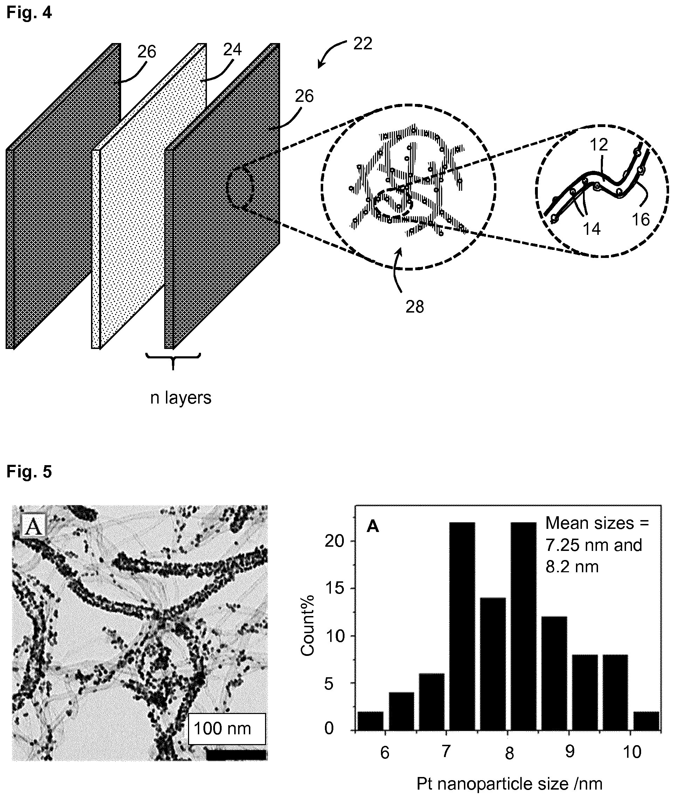

Membrane electrode assemblies (MEAs) were prepared by alternated spraying of PDA-MWNT/Pt and MWNT/Pt catalyst, respectively, onto a Nafion™ 117 membrane. To this end, the membranes were first pretreated by boiling in 3 %-wt hydrogen peroxide and deionized water for 1 h, then rinsed in boiling deionized water for 1 h, put into boiling 0.5 M sulfuric acid for 30 min, and finally rinsed again in boiling deionized water for 1 h. PDA-MWNT/Pt were dispersed in isopropanol under sonication for 15 min and Nafion™ perfluorinated resin solution was added to the suspension to obtain a stable dispersion for LBL assembly. The suspension was sprayed onto one of the membranes in the following conditions. Each deposition layer was obtained by 1 s of spraying and left to dry for 1 s before the next layer was applied. The process was repeated until the desired thickness was obtained. In total, 50 layers of PDA-MWNT/Pt were applied. The multilayered nanocomposite stack is noted [PDA-MWNT/Pt)]_n, n representing the number of layers sprayed with the same suspension (here n=50). Fig. 4 shows a MEA 22 comprising a PEM 24 serving as the substrate of two electrocatalyst layers 26 (one on each side of the substrate) obtained by LBL spray deposition of PDA-MWNT/Pt. The porous network 28 formed on the PEM 24 is illustrated as a magnified detail. The porous network 28 is composed of Pt-decorated MWNTs 12 sheathed with PDA coating 16.

A multilayered nanocomposite stack of MWNT/Pt was obtained by LBL spray deposition using similar deposition parameters, in particular, the same number of spraying cycles, but slightly longer deposition times for each layer (2-3 s). The multilayered nanocomposite stack of MWNT/Pt was thus [MWNT/Pt)]_{50}.

The schematic view of the multilayered electrode assembly is shown in Fig. 4. The anodes and the cathodes of the two systems (PDA-MWNT/Pt and MWNT/Pt) were assembled in a way allowing a fine tuning of the contact area of the functional species: the Pt nanoparticles, electric conductive support (MWNT), and the proton conductive media (PDA). The intersection of these components and the gas phase constitute the so-called TPB (triple-phase boundary). In order to enhance the area of the TPB, the components were sprayed successively to form the multilayered cathodes and anodes ([PDA-MWNT/Pt]_{50} and [MWNT/Pt]_{50}). This assembly technique resulted in a 3D porous network with good reactant/product transport.

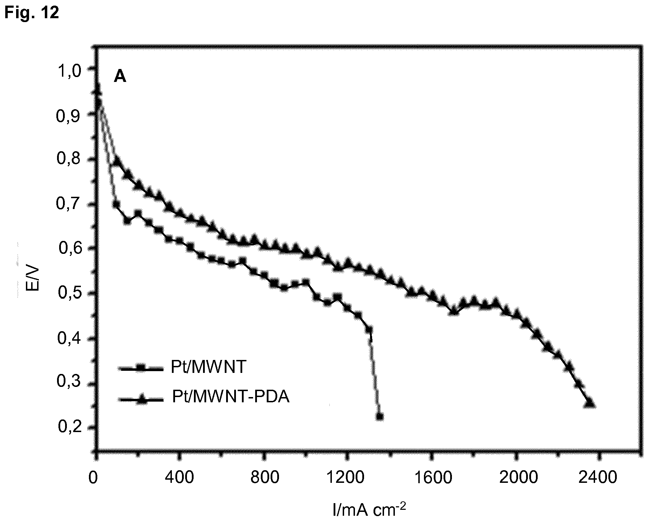

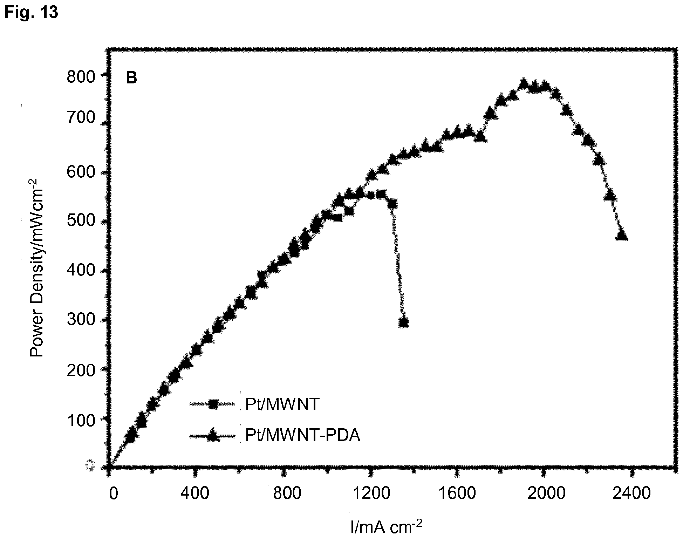

*In situ* fuel cell measurements were performed. The polarization curves for [PDA-MWNT/Pt]_{50} and [MWNT/Pt]_{50} and the power density curves are displayed in Figs. 12 and 13. The fuel cell measurements of the MEAs were carried out by sandwiching the MEAs between two pieces of H2315-13 carbon paper serving as gas diffusion layers (GDL), then fixing them between two bipolar plates with flow field. The electrodes were fed with $H_2$ at a rate of 150 mL/min and high-purity $O_2$ at a rate of 75 mL/min. A humidifier was used in order to hydrate the fuel cell. 100 % humidified gases were been injected in the cell during the fuel cell test. Electrode temperature was set to 80 °C. The polarization curves were collected in galvanostatic mode by using a FuelCon Evaluator C50 test bench (FuelCon AG, Germany). Maximum power densities of 780 mW $cm^{-2}$ and 530 mW $cm^{-2}$ were obtained for [PDA-MWNT/Pt]_{50} and [MWNT/Pt]_{50}, respectively. The measured [PDA-MWNT/Pt]_{50} and [MWNT/Pt]_{50} had a Pt loading of 0.014 mg $cm^{-2}$ and 0.020 mg $cm^{-2}$, respectively. The loading of the anode was kept the same for both electrodes. Starting with the maximum power density and the Pt loading of the anode and cathode, Pt utilization was calculated. Pt utilizations for [PDA-MWNT/Pt]_{50} and [MWNT/Pt]_{50} were 6051 W $g_{(Pt)}^{-1}$ and 2912 W $g_{(Pt)}^{-1}$. Note that the two values of Pt utilization reflect the results from the CV experiments, where both systems had different ECSA. It is remarkable that both systems show differences in terms of performance and that the presence of PDA seems to strongly boost fuel cell performance.

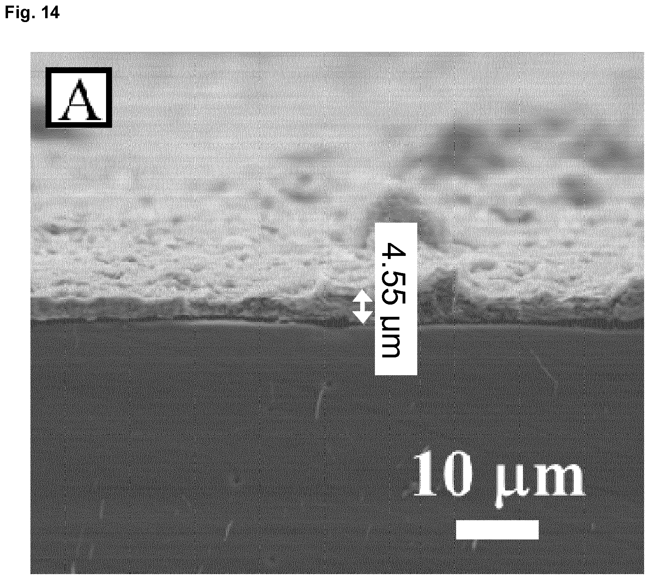

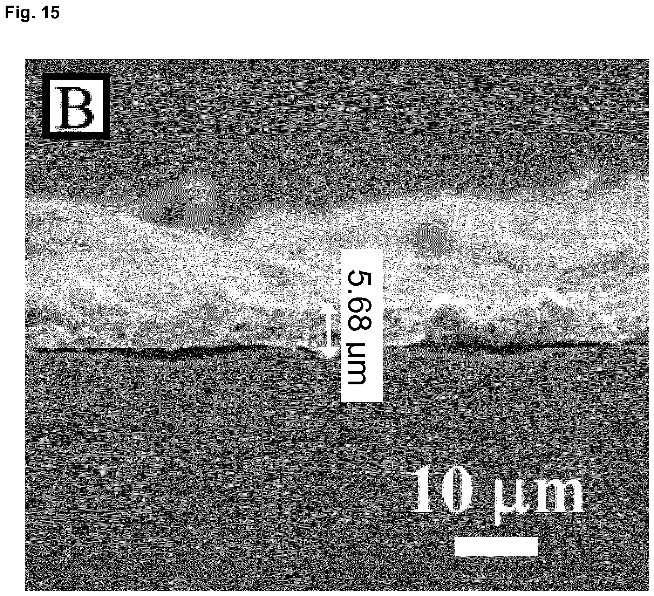

Figs. 14 and 15 scanning electron microscopy (SEM) micrographs of [MWNT/Pt]_{50} and [PDA-MWNT/Pt]_{50} taken using a Quanta FEG 200 (FEI Nova, Netherland) field-emission gun scanning electron microscope. Each sample was cut to a piece of 1 cmx0.2 cm on a SEM holder along the middle axis to get an insight into the electrode's morphology. The SEM micrographs of the [MWNT/Pt]_{50} and [PDA-MWNT/Pt]_{50} electrodes indicate very porous structures. The average thicknesses were measured to be 4.5 $\mu m$ and 5.6 $\mu m$, respectively.

In order to compare the stability of the catalyst supports, LBL-spray deposited PDA-coated CNTs (not bearing Pt nanoparticles, [PDA-MWNT]_{50}) and LBL-spray deposited naked CNTs (not bearing Pt nanoparti-

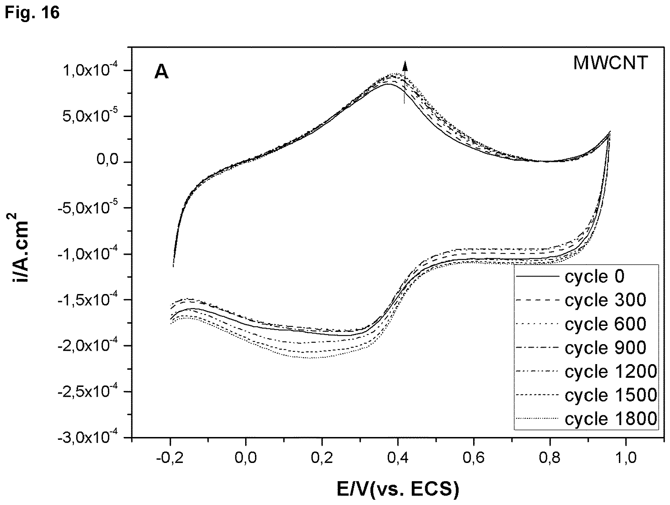

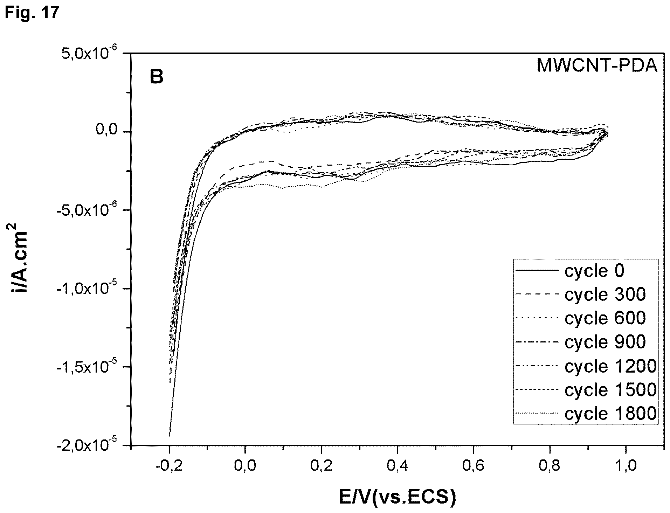

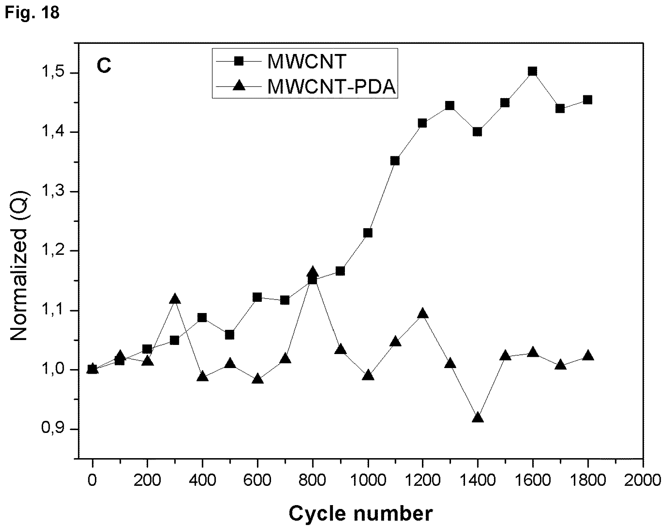

cles, [MWNT]$_{50}$) were subjected to continued cyclic voltammogram tests (1800 cycles). The results are shown in Figs. 16-18. Fig. 16 clearly evidences that the amount of oxygen moieties on the surface of the MWNTs increases with the cycle number. This could be due to quinone (Q) and hydroquinone (HQ) redox reactions. Fig. 17 shows no inclination of the curve during cycling, which suggests that there is no change in the surface resistance and that the conductivity of PDA-MWNT/Pt remains stable during cycling. During cycling, the area under the voltammogram of PDA-MWNT does not change substantially, meaning that there are not redox peaks. This proves that PDA-MWNT films exhibit very good electrochemical stability (resistance to corrosion). Fig. 18 depicts the normalized coulomb charge HQ/Q plots for [PDA-MWNT]$_{50}$ and [MWNT]$_{50}$. The charge rate of the catalytic support can be determined by comparing the charge integral. The hydraquinone-quinone (HQ-Q) peak, indicates the peak surface oxidation currents after a certain duration. The surface charge density due to the surface reaction of the electrodes can be calculated by subtracting the pseudo-capacitance charge from total charge in the HQ-Q region and integrating the area under the peak. This can give a representation of the amount of surface oxide (C/O) groups, formed due to voltage cycling. Fig. 18 clearly suggests that [MWNT]$_{50}$ tends to corrode, while [PDA-MWNT]$_{50}$ remains stable and is thus strongly corrosion-resistant.

The cyclic voltammograms were acquired with a Gamry Reference 600 potentiostat (USA) in a standard glass three-compartment electrochemical cell with a glassy carbon working electrode (Ø = 3 mm), a Pt wire serving as counter electrode and an SCE as the reference electrode. The potential between the working electrode (WE) and reference electrode was cycled between -0.2 to 1 V with a sweep rate of 50 mV s$^{-1}$. The measurement curves were recorded after a stable response had been obtained. All electrochemical measurements were carried out in 0.5 M (molar) H$_2$SO$_4$ (ACS reagent 70 %) at 25 °C. The electrolyte was purged for 5 min with Ar to eliminate oxygen before testing. After each experiment, the WE was polished with 1-$\mu$m diamond paste and cleaned using 2000 CVs restructuration cycles between 0-1.6 V with a sweep rate of 10 V s$^{-1}$ in 0.5 M H$_2$SO$_4$ solution to remove remaining surface oxides.

All materials in these examples (multi-walled carbon nanotubes, Nafion™ 117 solution, etc.) were used as received from Sigma-Aldrich.

In the example according to a preferred embodiment of the invention, a novel electrocatalytically active [PDA-MWNT/Pt]$_{50}$ multilayered nanocomposite film was obtained via spray deposition. The [PDA-MWNT/Pt]$_n$ multilayered films showed very high performance in terms of power densities as well as very high Pt utilizations. Furthermore, we proved that PDA-MWNT supports exhibit a better oxidation resistance than MWNT. Hence PDA-MWNT supports are very interesting candidate for replacing carbon black without a loss in performance.

Furthermore, a simple preparation technique for high performance and long lasting advanced electrode structures was demonstrated. A porous network of Pt-decorated MWNTs overcoated with PDA was produced using LBL spray-deposition. The porous architecture seems to ease the gas permeability leading to a better accessibility of the Pt nanoparticles.

While specific examples and embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Literature List

[1] J. Larminie, A. Dicks, Fuel Cell Systems Explained, first ed., John Wiley & Sons Ltd, UK, 2001.

[2] J.-H. Wee, Renew. Sust. Energy Rev. 2007, 11, 1720-1738.

[3] S. Srinivasan, E.A. Ticianelli, C.R. Derouin, A. Redondo, J. Power Sources 1988, 22, 359-375.

[4] S. Srinivasan, O.A. Velev, A. Parthasarathy, D.J. Manko, A.J. Appleby, J. Power Sources 1991, 36, 299-320.

[5] R. O'Hayre, D.R. Barnett, F.F. Prinz, J. Electrochem. Soc. 2005, 152 (2), A439-A444.

[6] A.D. Taylor, E.Y. Kim, V.P. Humes, J. Kizuka, L.T. Thompson, J. Power Sources 2007, 171, 101-106.

[7] S. Towne, V. Viswanahan, J. Holbery, P. Rieke, J. Power Sources 2007, 171,575-584.

[8] M. Cavarroc, A. Ennadjaoui, M. Mougenot, P. Brault, R. Escalier, Y. Tessier, J. Durand, S. Roualdes, T. Sauvage, C. Coutanceau, Electrochem. Commun. 2009, 11, 859-861.

[9] J.-H. Wee, K.-Y. Lee, S.H. Kim, J. Power Sources 2007, 165, 667-677.

[10] R. O'Hayre, S.-J. Lee, S.-W. Cha, F.B. Prinz, J. Power Sources 2002, 109, 483-493.

[11] M. Michel, A. Taylor, R. Sekol, P. Podsiadlo, P. Ho, N. Kotov, L. Thompson, Adv. Mater. 2007, 19, 3859-3864.

[12] M. Michel, F. Ettingshausen, F. Scheiba, A. Wolz, C. Roth, Phys. Chem. Chem. Phys. 2008, 10, 3796-3801.

[13] A.D. Taylor, M. Michel, R.C. Sekol, J.M. Kizuka, N.A. Kotov, L.T. Thompson, Adv. Funct. Mater. 2008, 18, 3003-3009.

[14] G. Decher, Science 1997, 277, 1232-1237.

[15] M. Michel, A. Taylor, R. Sekol, P. Podsiadlo, P. Ho, N. Kotov, L. Thompson, Adv. Mater. 2007, 19, 3859-3864

[16] A. Wolz , S. Zils , D. Ruch , N. Kotov , C. Roth , M. Michel Adv. Energy Mater. 2012, 2, 569-574

[17] A. Izquierdo, S.S. Ono, J.-C. Voegel, P. Schaaf, G. Decher, Langmuir 21 2005, 16, 7558-7567

[18] A. Wolz, S. Zils, M. Michelb, C. Roth, Journal of Power Sources, 2010, 195, 8162-8167

[19] X. Wang, W. Li, Z. Chen, M. Waje, Y. Yan, J. Power Sources 2006, 158, 154-159.

[20] H. Lee, S.M. Dellatore, W.M. Miller, P.B. Messersmith, Science 2007, 318, 426-430.

[21] M. Lin, H. Huang, Y. Liu, C. Liang, S. Fei, X. Chen, C. Ni, Nanotechnology 2013, 24, 065501.

[22] J. Zhao, W. Zhang, P. Sherrell, J.M. Razal, X. Huang, A.I. Minett, J. Chen, ACS Appl.Mater. Interfaces 2012, 4, 44-48.

[23] H. Hu, B. Yu, Q. Ye, Y. Gu, F. Zhou, Carbon 2010, 48, 2347-2353.

[24] Y. Xiao, W. Jiang, S. Wan, X. Zhang, J. Hu, Z. Wei, L. Wan, J. Mater. Chem. 2013, A 1, 7463-7468.

[25] L.M. Roen, C.H. Paik, T.D. Jarvi, Electrochem. Solid-State Lett. 2004, 7(1), A19-A22.

[26] Vincent Ball, Doriane Del Frari , Marc Michel, Markus J. Buehler, Valérie Toniazzo, Manoj K. Singh, Jose Gracio, David Ruch, BioNanoSci. 2012, 2, 16-34

[27] Y. Wang, X. Xu, Z. Tian, Y. Zong, H. Cheng, C. Lin, Chem. Eur. J. 2006, 12, 2542.

[28] S. Zils, M. Timpel, T. Arlt, A.Wolz, I.Manke, C. Roth, Fuel cell 2010, 6, 966-972

[29] H. Huang, Z. He, X. Lin, W. Ruan, Y. Liua,Z. Yang, Applied Catalysis A: General, 2015, 490, 65-70

## Claims

1. An electrocatalytically active nanocomposite material, comprising electrically conductive carbon material decorated with platinum nanoparticles or nanoclusters anchored thereon, **characterized in that** the electrically conductive carbon material and the platinum nanoparticles or nanoclusters anchored thereon are overcoated with catecholamine-based polymer.

2. The electrocatalytically active nanocomposite material as claimed in claim 1, wherein the electrically conductive carbon material comprises graphitized carbon material, such as e.g. carbon nanotubes, graphene, or graphite flakes.

3. The electrocatalytically active nanocomposite material as claimed in claim 1 or 2, wherein the electrically conductive carbon material and the platinum nanoparticles or nanoclusters anchored thereon are overcoated with polydopamine.

4. The electrocatalytically active nanocomposite material as claimed in any one of claims 1 to 3, wherein the electrically conductive carbon material comprises a catecholamine surface functionalization and wherein the platinum nanoparticles or nanoclusters are anchored on the surface functionalization of the electrically conductive carbon material.

5. The electrocatalytically active nanocomposite material as claimed in any one of claims 1 to 4, forming a porous three-dimensional network.

6. The electrocatalytically active nanocomposite material as claimed in any one of claims 1 to 4, provided in the form of a suspension, preferably a colloidal suspension.

7. An electrocatalyst, comprising the electrocatalytically active nanocomposite material as claimed in any one of claims 1 to 5.

8. A fuel cell, e.g. a direct methanol fuel cell or a polymer electrolyte membrane fuel cell, comprising the electrocatalyst of claim 7.

9. An electrolyser comprising the electrocatalyst of claim 7.

10. A method for producing electrocatalytically active nanocomposite material, comprising:

    depositing platinum nanoparticles or nanoclusters on electrically conductive carbon material using a suspension of the electrically conductive carbon material in a solution of chloroplatinic acid so as to form platinum-decorated carbon material; and
**characterized by**
overcoating the platinum-decorated carbon material with catecholamine-polymer.

11. The method as claimed in claim 10, wherein the electrically conductive carbon material comprises graphitized carbon material, such as e.g. carbon nanotubes, graphene, or graphite particles or flakes.

12. The method as claimed in claim 10 or 11, wherein the platinum-decorated carbon material is overcoated with polydopamine using a dispersion of the platinum-decorated carbon material in a dopamine salt solution.

13. The method as claimed in any one of claims 10 to 12, wherein the electrically conductive carbon material is provided with a catecholamine surface functionalization before deposition of the platinum nanoparticles or nanoclusters.

14. A method for producing an electrocatalyst, comprising:
dispersing electrocatalytically active nanocomposite material as claimed in any one of claims 1 to 4, and/or produced according to the method claimed any one of claims 10 to 13, and depositing, e.g. using an LBL spraying or dipping technique, the dispersed electrocatalytically active nanocomposite material on a substrate so as to create a porous three-dimensional network of the electrocatalytically active nanocomposite material.

15. The method as claimed in claim 14, wherein the substrate comprises at least one of a polymer electrolyte membrane and a gas diffusion layer, e.g. for use in a fuel cell and/or an electrolyser.

## Patentansprüche

1. Elektrokatalytisch aktives Nanokompositmaterial, das elektrisch leitfähiges Kohlenstoffmaterial umfasst, welches mit daran verankerten Platin-Nanopartikeln oder -Nanoclustern ausgestattet ist, **dadurch gekennzeichnet, dass** das elektrisch leitfähige Kohlenstoffmaterial und die daran verankerten Platin-Nanopartikel oder -Nanocluster mit Polymer auf Katecholaminbasis überzogen sind.

2. Elektrokatalytisch aktives Nanokompositmaterial nach Anspruch 1, wobei das elektrisch leitfähige Kohlenstoffmaterial graphitisiertes Kohlenstoffmaterial umfasst, wie z. B. Kohlenstoff-Nanoröhrchen, Graphen oder Graphitflocken.

3. Elektrokatalytisch aktives Nanokompositmaterial nach Anspruch 1 oder 2, wobei das elektrisch leitfähige Kohlenstoffmaterial und die darauf verankerten Platin-Nanopartikel oder -Nanocluster mit Polydopamin überzogen sind.

4. Elektrolytisch aktives Nanokompositmaterial nach einem der Ansprüche 1 bis 3, wobei das elektrisch leitfähige Kohlenstoffmaterial eine Katecholamin-Oberflächenfunktionalisierung umfasst, und wobei die Platin-Nanopartikel oder -Nanocluster auf der Oberflächenfunktionalisierung des elektrisch leitfähigen Kohlenstoffmaterials verankert sind.

5. Elektrokatalytisch aktives Nanokompositmaterial nach einem der Ansprüche 1 bis 4, das ein poröses dreidimensionales Netzwerk bildet.

6. Elektrokatalytisch aktives Nanokompositmaterial nach einem der Ansprüche 1 bis 4, das in Form einer Suspension, vorzugsweise einer kolloidalen Suspension bereitgestellt wird.

7. Elektrokatalysator, umfassend das elektrokatalytisch aktive Nanokompositmaterial nach einem der Ansprüche 1 bis 5.

8. Brennstoffzelle, z. B. direkte Methanolbrennstoffzelle oder Polymerelektrolytmembran-Brennstoffzelle, umfassend den Elektrokatalysator nach Anspruch 7.

9. Elektrolyseur, umfassend den Elektrokatalysator nach Anspruch 7.

10. Verfahren zur Herstellung von elektrokatalytisch aktivem Nanokompositmaterial, umfassend:

Abscheiden von Platin-Nanopartikeln oder -Nanoclustern auf elektrisch leitfähigem Kohlenstoffmaterial unter Verwendung einer Suspension des elektrisch leitfähigen Kohlenstoffmaterials in einer Lösung von Chlorplatinsäure, um so das mit Platin ausgestattete Kohlenstoffmaterial zu bilden; und **gekennzeichnet durch** Überziehen des mit Platin ausgestatteten Kohlenstoffmaterials mit Katecholaminpolymer.

11. Verfahren nach Anspruch 10, wobei das elektrisch leitfähige Kohlenstoffmaterial graphitisiertes Kohlenstoffmaterial umfasst, wie z. B. Kohlenstoff-Nanoröhrchen, Graphen oder Graphitpartikel oder -flocken.

12. Verfahren nach Anspruch 10 oder 11, wobei das mit Platin ausgestattete Kohlenstoffmaterial unter Verwendung einer Dispersion des mit Platin ausgestatteten Kohlenstoffmaterials in einer Dopaminsalzlösung mit Polydopamin überzogen wird.

**13.** Verfahren nach einem der Ansprüche 10 bis 12, wobei das elektrisch leitfähige Kohlenstoffmaterial vor dem Abscheiden der Platin-Nanopartikel oder -Nanocluster mit einer Katecholamin-Oberflächenfunktionalisierung versehen wird.

**14.** Verfahren zum Herstellen eines Elektrokatalysators, umfassend:
Dispergieren von elektrokatalytisch aktivem Nanokompositmaterial nach einem der Ansprüche 1 bis 4 und/oder hergestellt nach dem Verfahren gemäß einem der Ansprüche 10 bis 13, und Abscheiden des dispergierten elektrokatalytisch aktiven Nanokompositmaterials auf einem Substrat, z. B. unter Verwendung einer LBL-Sprüh- oder -Tauchtechnik, um so ein poröses dreidimensionales Netzwerk des elektrokatalytisch aktiven Nanokompositmaterials zu erzeugen.

**15.** Verfahren nach Anspruch 14, wobei das Substrat mindestens eine von einer Polymerelektrolytmembran und einer Gasdiffusionsschicht umfasst, z. B. zur Verwendung in einer Brennstoffzelle und/oder in einem Elektrolyseur.

## Revendications

**1.** Matériau nanocomposite électrocatalytiquement actif, comprenant un matériau carboné électriquement conducteur décoré de nanoparticules ou de nanoagrégats de platine ancrés sur celui-ci, **caractérisé en ce que** le matériau carboné électriquement conducteur et les nanoparticules ou nanoagrégats de platine ancrés sur celui-ci sont recouverts d'un polymère à base de catécholamine.

**2.** Matériau nanocomposite électrocatalytiquement actif selon la revendication 1, le matériau carboné électriquement conducteur comprenant du matériau carboné graphitisé, tel que par exemple des nanotubes de carbone, du graphène ou des paillettes de graphite.

**3.** Matériau nanocomposite électrocatalytiquement actif selon la revendication 1 ou 2, le matériau carboné électriquement conducteur et les nanoparticules ou nanoagrégats de platine ancrés sur celui-ci étant recouverts de polydopamine.

**4.** Matériau nanocomposite électrocatalytiquement actif selon l'une quelconque des revendications 1 à 3, le matériau carboné électriquement conducteur comprenant une fonctionnalisation de surface de catécholamine et les nanoparticules ou nanoagrégats de platine étant ancrés sur la fonctionnalisation de surface du matériau carboné électriquement conducteur.

**5.** Matériau nanocomposite électrocatalytiquement actif selon l'une quelconque des revendications 1 à 4, formant un réseau poreux tridimensionnel.

**6.** Matériau nanocomposite électrocatalytiquement actif selon l'une quelconque des revendications 1 à 4, fourni sous forme d'une suspension, de préférence une suspension colloïdale.

**7.** Électrocatalyseur, comprenant le matériau nanocomposite électrocatalytiquement actif selon l'une quelconque des revendications 1 à 5.

**8.** Pile à combustible, par exemple pile à combustible à méthanol direct ou pile à combustible à membrane électrolytique polymère, comprenant l'électrocatalyseur de la revendication 7.

**9.** Électrolyseur comprenant l'électrocatalyseur de la revendication 7.

**10.** Procédé de production de matériau nanocomposite électrocatalytiquement actif, consistant à :

déposer des nanoparticules ou nanoagrégats de platine sur du matériau carboné électriquement conducteur à l'aide d'une suspension du matériau carboné électriquement conducteur dans une solution d'acide chloroplatinique de manière à former le matériau carboné décoré de platine ; et
**caractérisé par** :
le recouvrement du matériau carboné décoré de platine par un polymère de catécholamine.

**11.** Procédé selon la revendication 10, le matériau carboné électriquement conducteur comprenant du matériau carboné graphitisé, tel que par exemple des nanotubes de carbone, du graphène ou des particules ou des paillettes de graphite.

**12.** Procédé selon la revendication 10 ou 11, le matériau carboné décoré de platine étant recouvert de polydopamine à l'aide d'une dispersion du matériau carboné décoré de platine dans une solution de sel de dopamine.

**13.** Procédé selon l'une quelconque des revendications 10 à 12, le matériau carboné électriquement conducteur étant doté d'une fonctionnalisation de surface de catécholamine avant le dépôt des nanoparticules ou nanoagrégats de platine.

**14.** Procédé de production d'un électrocatalyseur, consistant à :

disperser du matériau nanocomposite électrocatalytiquement actif selon l'une quelconque des revendications 1 à 4 et/ou produit selon le procédé selon l'une quelconque des revendications 10 à 13 et déposer, par exemple à l'aide d'une technique de pulvérisation ou d'immersion LBL (couche par couche), le matériau nanocomposite électrocatalytiquement actif dispersé sur un substrat de manière à créer un réseau poreux tridimensionnel du matériau nanocomposite électrocatalytiquement actif.

**15.** Procédé selon la revendication 14, le substrat comprenant au moins l'un parmi une membrane électrolytique polymère et une couche de diffusion de gaz, par exemple destinée à être utilisée dans une pile à combustible et/ou un électrolyseur.

**Fig. 1**

10

14

12

16

**Fig. 2**

10'

14

18

16

**Fig. 3**

10"

16

20

14

**Fig. 4**

n layers

**Fig. 5**

**Fig. 6**

Mean size = 7.25 nm

**Fig. 7**

**Fig. 8**

**Fig. 9**

**Fig. 10**

**Fig. 11**

**Fig. 12**

**Fig. 13**

Fig. 14

**Fig. 15**

**Fig. 16**

**Fig. 17**

**Fig. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015255802 A

### Non-patent literature cited in the description

- **H. HUANG et al.** Ultradispersed platinum nanoclusters on polydopamine-functionalized carbon nanotubes as an excellent catalyst for methanol oxidation reaction. *Applied Catalysis A: General,* 2015, vol. 490, 65-70
- **L. GUO et al.** A mussel-inspired polydopamine coating as a versatile platform for the in situ synthesis of graphene-based nanocomposites. *Nanoscale,* 2012, vol. 4, 5864-67
- **R. FANGFANG et al.** Facile synthesis of PtAu nanoparticles supported on polydopamine reduced and modified graphene oxide as a highly active catalyst for methanol oxidation. *Electrochimica acta,* vol. 153, 175
- **J. LARMINIE ; A. DICKS.** Fuel Cell Systems Explained. John Wiley & Sons Ltd, 2001
- **J.-H. WEE.** *Renew. Sust. Energy Rev.,* 2007, vol. 11, 1720-1738
- **S. SRINIVASAN ; E.A. TICIANELLI ; C.R. DEROUIN ; A. REDONDO.** *J. Power Sources,* 1988, vol. 22, 359-375
- **S. SRINIVASAN ; O.A. VELEV ; A. PARTHASARATHY ; D.J. MANKO ; A.J. APPLEBY.** *J. Power Sources,* 1991, vol. 36, 299-320
- **R. O'HAYRE ; D.R. BARNETT ; F.F. PRINZ.** *J. Electrochem. Soc.,* 2005, vol. 152 (2), A439-A444
- **A.D. TAYLOR ; E.Y. KIM ; V.P. HUMES ; J. KIZUKA ; L.T. THOMPSON.** *J. Power Sources,* 2007, vol. 171, 101-106
- **S. TOWNE ; V. VISWANAHAN ; J. HOLBERY ; P. RIEKE.** *J. Power Sources,* 2007, vol. 171, 575-584
- **M. CAVARROC ; A. ENNADJAOUI ; M. MOUGENOT ; P. BRAULT ; R. ESCALIER ; Y. TESSIER ; J. DURAND ; S. ROUALDES ; T. SAUVAGE ; C. COUTANCEAU.** *Electrochem. Commun.,* 2009, vol. 11, 859-861
- **J.-H. WEE ; K.-Y. LEE ; S.H. KIM.** *J. Power Sources,* 2007, vol. 165, 667-677
- **R. O'HAYRE ; S.-J. LEE ; S.-W. CHA ; F.B. PRINZ.** *J. Power Sources,* 2002, vol. 109, 483-493
- **M. MICHEL ; A. TAYLOR ; R. SEKOL ; P. PODSIADLO ; P. HO ; N. KOTOV.** *L. Thompson, Adv. Mater.,* 2007, vol. 19, 3859-3864
- **M. MICHEL ; F. ETTINGSHAUSEN ; F. SCHEIBA ; A. WOLZ ; C. ROTH.** *Phys. Chem. Chem. Phys.,* 2008, vol. 10, 3796-3801
- **A.D. TAYLOR ; M. MICHEL ; R.C. SEKOL ; J.M. KIZUKA ; N.A. KOTOV ; L.T. THOMPSON.** *Adv. Funct. Mater.,* 2008, vol. 18, 3003-3009
- **G. DECHER.** *Science,* 1997, vol. 277, 1232-1237
- **M. MICHEL ; A. TAYLOR ; R. SEKOL ; P. PODSIADLO ; P. HO ; N. KOTOV ; L. THOMPSON.** *Adv. Mater.,* 2007, vol. 19, 3859-3864
- **A. WOLZ ; S. ZILS ; D. RUCH ; N. KOTOV ; C. ROTH ; M. MICHEL.** *Adv. Energy Mater.,* 2012, vol. 2, 569-574
- **A. IZQUIERDO ; S.S. ONO ; J.-C. VOEGEL ; P. SCHAAF ; G. DECHER.** *Langmuir,* 2005, vol. 21 (16), 7558-7567
- **A. WOLZ ; S. ZILS ; M. MICHELB ; C. ROTH.** *Journal of Power Sources,* 2010, vol. 195, 8162-8167
- **X. WANG ; W. LI ; Z. CHEN ; M. WAJE ; Y. YAN.** *J. Power Sources,* 2006, vol. 158, 154-159
- **H. LEE ; S.M. DELLATORE ; W.M. MILLER ; P.B. MESSERSMITH.** *Science,* 2007, vol. 318, 426-430
- **M. LIN ; H. HUANG ; Y. LIU ; C. LIANG ; S. FEI ; X. CHEN ; C. NI.** *Nanotechnology,* 2013, vol. 24, 065501
- **J. ZHAO ; W. ZHANG ; P. SHERRELL ; J.M. RAZAL ; X. HUANG ; A.I. MINETT ; J. CHEN.** *ACS Appl.Mater. Interfaces,* 2012, vol. 4, 44-48
- **H. HU ; B. YU ; Q. YE ; Y. GU ; F. ZHOU.** *Carbon,* 2010, vol. 48, 2347-2353
- **Y. XIAO ; W. JIANG ; S. WAN ; X. ZHANG ; J. HU ; Z. WEI ; L. WAN.** *J. Mater. Chem.,* 2013, vol. A 1, 7463-7468
- **L.M. ROEN ; C.H. PAIK ; T.D. JARVI.** *Electrochem. Solid-State Lett.,* 2004, vol. 7 (1), A19-A22
- **VINCENT BALL ; DORIANE DEL FRARI ; MARC MICHEL ; MARKUS J. BUEHLER ; VALÉRIE TONIAZZO ; MANOJ K. SINGH ; JOSE GRACIO ; DAVID RUCH.** *BioNanoSci.,* 2012, vol. 2, 16-34

- **Y. WANG ; X. XU ; Z. TIAN ; Y. ZONG ; H. CHENG ; C. LIN.** *Chem. Eur. J.,* 2006, vol. 12, 2542
- **S. ZILS ; M. TIMPEL ; T. ARLT ; A.WOLZ ; I.MANKE ; C. ROTH.** *Fuel cell,* 2010, vol. 6, 966-972
- **H. HUANG ; Z. HE ; X. LIN ; W. RUAN ; Y. LIUA ; Z. YANG.** *Applied Catalysis A: General,* 2015, vol. 490, 65-70